(19) Europäisches Patentamt

European Patent Office

Office européen des brevets

(11) Publication number: 0 503 480 A2

# EUROPEAN PATENT APPLICATION

(21) Application number: 92103776.8

(22) Date of filing: 05.03.92

(51) Int. Cl.⁵: G11B 27/031, G11B 27/34

(30) Priority: 08.03.91 JP 69009/91

(43) Date of publication of application:
16.09.92 Bulletin 92/38

(84) Designated Contracting States:
DE FR GB

(71) Applicant: TEAC CORPORATION
3-7-3, Naka-cho
Musashino-shi Tokyo(JP)

(72) Inventor: Itoya, Shoji
1017-3, Itsukaichi, Itsukaichi-machi
Nishitama-gun, Tokyo(JP)

(74) Representative: Meyer-Roxlau, Reiner
Ferdinand, Dipl.-Ing.
Anwaltskanzlei Wey & Partner
Widenmeyerstrasse 49
W-8000 München 22(DE)

(54) Multitrack tape system having a random access storage medium for easier editing and higher capacity.

(57) A recording and reproducing system employing both a multichannel magnetic tape (32) as a high capacity storage medium and a magnetic disk (46) as a random access storage medium in order to combine their advantages while compensating for the shortcomings of each other. A switching circuit (16) operates under the direction of a programmable system controller (26) for simultaneously or selectively delivering a plurality of channels of input information, such as digital audio signals, to a tape drive (12) and a disk drive (14), and for simultaneously or selectively delivering the information retrieved from the tape and that retrieved from the disk to system output terminals (20-1, 20-2, 20-n). Information transfer is also possible between the tape drive (12) and the disk drive (14) through the switching circuit (16), so that the system permits a variety of editing operations of the recorded information.

FIG. 1

## BACKGROUND OF THE INVENTION

My invention relates to recording and reproducing systems, and more particularly to such a system suitable for recording audio signals in digitized form and for reproducing and putting them out in analog form. Still more particularly, my invention pertains to a multitrack magnetic tape system combined with a random access storage medium such as a magnetic disk for higher storage capacity and easier editing of the recordings.

Multitrack tape recorders have won extensive use for the recording of audio signals because of their capability of simultaneously accepting as many signal channels as there are tracks on the tape. Such recorders are available today in both analog and digital versions. As heretofore constructed and used, however, multitrack tape recorders had some inconveniences.

One of the inconveniences arose in recording dissimilar signals on respective tape tracks, as in multichannel recording of a musical performance. The full recording capacity of the tape could be utilized when all the dissimilar signals were recorded from the beginnings to ends of the tape tracks. There are cases, however, in which one or more of the input signals are of such short duration that they are recorded on only fractions of the tape tracks. Take, for example, the multichannel recording of a musical performance together with some sound effects of far shorter durations to be superposed on the music. Not the full tape capacity was utilized in such cases.

Another inconvenience was encountered in editing the recordings on the tape. Conventional multitrack tape recorders permitted, for example, rerecording on specified parts of specified tape tracks. However, such rerecording was no easy task because multitrack tapes are difficult of random access.

There are, of course, other storage media that are far more readily randomly accessible. Magnetic disks are typical of such random access storage media. Digital audio signals can be recorded on magnetic disks. However, magnetic disks are inconveniently less in storage capacity than multitrack magnetic tapes and, in consequence, per se represent no satisfactory substitutes therefor.

## SUMMARY OF THE INVENTION

I have hereby invented a novel recording and reproducing system that combines the advantages of a large capacity storage medium such as multitrack magnetic tapes and a random access storage medium such as magnetic disks. The recording and reproducing system according to my invention is particularly notable for its greatly enlarged storage capacity and for the greater ease of editing.

Briefly, my invention may be best summarized as a system comprising first storage means for writing and reading information on a high capacity storage medium, and second storage means for writing and reading information on a random access storage medium disk. Normally, the input information may be recorded on the large capacity storage medium, and only a fraction or fractions of the input information on the random access storage medium. Thus the system further comprises switch means for simultaneously or selectively delivering the input information to the first and the second storage means.

Preferably, the same switch means may also be utilized for simultaneously or selectively delivering to output means the information retrieved from the high capacity storage medium and the information retrieved from the random access storage medium. Further the switching means may also be used for the transfer of information between the first and the second storage means.

In a typical embodiment of my invention to be disclosed herein, in which the system is adapted for the recording and reproduction of multichannel audio signals, a multitrack magnetic tape is employed as the high capacity storage medium, and a hard magnetic disk as the random access storage medium. Thus the first storage means takes the form of a tape drive, and the second storage means a disk drive.

A desired number of channels of music are recorded on the respective tracks of the magnetic tape. The magnetic disk, on the other hand, may used for recording sound effects which are to be reproduced jointly with the music and which are of shorter durations than the music. The full storage capacity of the multichannel tape can therefore be utilized, and the disk serves as an additional track or tracks of the tape.

The editing of the recorded information is also easy as information transfer is possible between tape drive and disk drive. The tape drive, the disk drive and the switch means are controllable for synchronized reproduction of information from both tape and disk, for rewriting of information on any part of any track of the tape, and for transfer of information from any part of any track of the tape to any part of any other track of the tape.

The above and other features and advantages of my invention and the manner of realizing them will become more apparent, and the invention itself will best be understood, from a study of the following description and appended claims, with reference had to the attached drawings showing a preferred embodiment of my invention.

*BRIEF DESCRIPTION OF THE DRAWINGS*

**FIG. 1** is a block diagram of a multichannel digital audio recording and reproducing system constructed in accordance with the novel concepts of my invention;

**FIG. 2** is a fragmentary representation of the multitrack magnetic tape used in the system of **FIG. 1**;

**FIG. 3** is a plan view of the magnetic disk used in the system of **FIG. 1**;

**FIG. 4** is a schematic electrical diagram showing the switching circuit of the **FIG. 1** system in detail;

**FIG. 5** is a diagram explanatory of how cross faders, for use in the **FIG. 4** switching circuit, operate; and

**FIG. 6** is a diagram showing various indications to be made on the display screen during the operation of the **FIG. 1** system.

*DESCRIPTION OF THE PREFERRED EMBODIMENT*

**General**

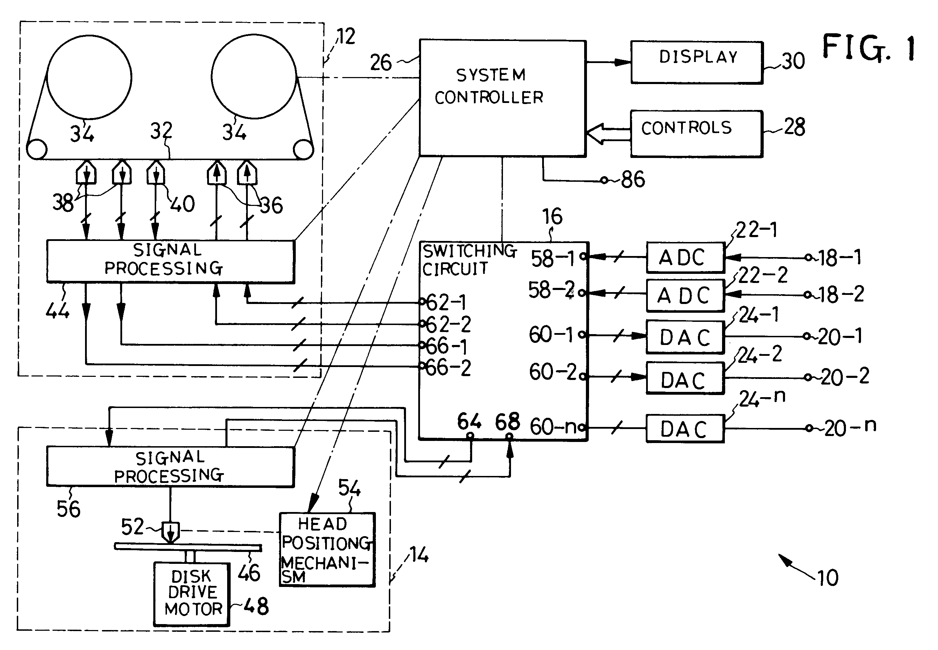

I will now describe my invention in detail as embodied in the multichannel digital audio recording and reproducing system illustrated in **FIG. 1** and therein generally designated **10**. This system utilizes a multitrack magnetic tape as a high capacity storage medium and a hard magnetic disk as a random access storage medium. Thus the representative recording and reproducing system 10 comprises a multitrack magnetic tape drive **12** and a hard magnetic disk drive **14**, which supplement each other for the accomplishment of the objectives of my invention. Both tape drive 12 and disk drive 14 can per se be of any known or suitable construction.

Another important component of the recording and reproducing system 10 is a switching circuit **16**. The tape drive 12 and the disk drive 14 are selectively connectable to each other, as well as to system input terminals **18-1** and **18-2** and system output terminals **20-1**, **20-2** and **20-n**, through the switching circuit 16. Analog to digital converters (ADC) **22-1** and **22-2** are connected respectively between the system input terminals 18-1 and 18-2 and the switching circuit 16. Digital to analog converters (DAC) **24-1**, **24-2** and **24-n** are connected respectively between the system output terminals 20-1, 20-2 and 20-n and the switching circuit 16.

Although I have shown only two system input terminals 18-1 and 18-2 and three system output terminals 20-1, 20-2 and 20-n for illustrative convenience, any greater numbers of such terminals may be provided in practice. For example, if the tape drive 12 is of eight channel construction, as many system input terminals may be provided. The number of the system output terminals is greater than that of the channels of the tape drive 12, being equal to the sum of the channel number of the tape drive and that of the disk drive 14. As desired, however, the number of the system output terminals may be made less than the sum of the channel numbers of the tape drive 12 and disk drive 14. Such a smaller number of system output terminals may then be put to selective use.

Also, in **FIG. 1**, I have shown the connections between switching circuit 16 and ADCs 22-1 and 22-2, between switching circuit and DACs 24-1, 24-2 and 24-n, between switching circuit and tape drive 12, and between switching circuit and disk drive 14 as single lines for illustrative convenience only. All these lines are, in reality, digital signal transmission paths capable of simultaneous transmission of all the bits of the digital audio signals being handled. The slash marks on the single lines, not only in **FIG. 1** but also in other figures to be referred to subsequently, should be understood to represent such digital signal transmission paths.

The recording and reproducing system 10 further comprises a programmable system controller **26** which in practice may take the form of a microcomputer or microprocessor. The system controller 26 is connected to the tape drive 12, disk drive 14 and switching circuit 16 for controlling their operations as dictated by a program that has been introduced therein. Manual controls **28** and a display device **30** are connected to the system controller 26 for purposes yet to be described.

I will discuss in more detail hereafter the above mentioned tape drive 12, the disk drive 14, the switching circuit 16, and the control system comprising the system controller 26, manual controls 28 and display 30, in that order and under separate headings. The operational description of the complete system 10 will follow the detailed discussion of the listed components.

**Multitrack Tape Drive**

With reference to **FIG. 1** the multitrack tape drive 12 has a multitrack magnetic tape **32** traveling between a pair of reels **34** along a predetermined transport path under the control of the system controller 26. Fixedly disposed along the tape transport path are magnetic recording heads **36**, magnetic reproducing heads **38** and a magnetic reproducing subhead **40**, all for the transfer of information with the tape 32. I have shown two recording heads 36 and two reproducing heads 38 purely to indicate that the tape 32 is a multitrack tape. All such heads may be combined in practice into a single head assembly having as many recording and reproducing gaps as required.

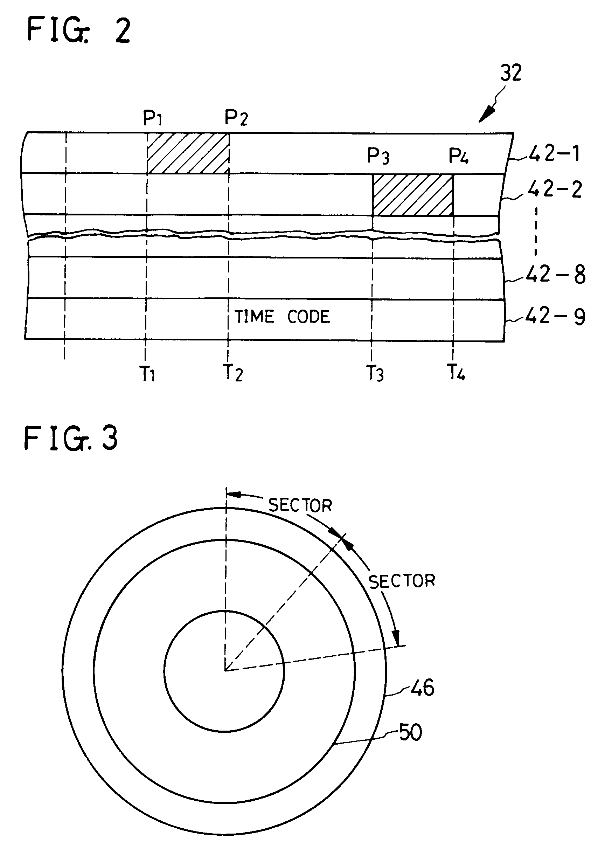

As illustrated in **FIG. 2**, the tape 32 may have eight signal tracks **42-1** through **42-8** and a time code track **42-9**. The eight signal tracks permit the recording of as many channels of audio signals in accordance with a prescribed format. Since each digital signal is composed of several bits, all the bits of each signal are to be recorded jointly, or in parallel form, on one of the signal tracks 42-1 through 42-8 by the recording heads 36 and are to be reproduced jointly therefrom by the reproducing heads 38.

The time code track 42-9 is for the recording of the known time code indicative of tape position. The time code is read by the subhead 40 and fed into the system controller 26 via the signal processing circuit **44**.

With reference back to **FIG. 1,** the tape drive 12 further comprises a signal processing circuit 44 connected between switching circuit 16 and magnetic heads 36, 38 and 40. Controlled by the system controller 26, the signal processing circuit 44 functions to process the incoming digital audio signals into the form suitable for recording on the tape 32, and the signals retrieved from the tape into the form suitable for delivery to the DACs 24-1, 24-2 and 24-*n*

**Hard Disk Drive**

As seen also in **FIG. 1**, the hard disk drive 14 has a hard magnetic disk **46** driven directly by an electric motor **48**. I have shown the magnetic disk 46 as being single sided, rather than double sided, for the convenience of disclosure. Thus, as indicated diagrammatically in **FIG. 3**, the disk 46 has a multiplicity of annular concentric data storage tracks **50**, one shown, formed on only one major surface thereof in accordance with the prior art. It will also be noted from **FIG. 3** that the disk 46 has a plurality of sectors. Each track section on each disk sector has a data field for the storage of user data and an identification field for the storage of an identification number preassigned to that sector.

**FIG. 1** shows a single magnetic read/write head or transducer **52** for writing and reading digital information on the tracks on the revolving disk 46. The head 52 is driven by a head positioning mechanism **54** for traveling across the tracks 50 on the disk 46. The head positioning mechanism 54 can be of any known or suitable design such as that comprising a voice coil motor operating under the control of the system controller 26.

Since the head 52 can be readily positioned on any sector of any track on the disk 46, I have employed the disk as a random access storage medium. It is also an advantage of the disk 46 that it permits the writing and reading of a plurality of channels of signals. However, as we have it today, the disk 46 is far less in storage capacity than the multitrack tape 32.

The disk drive 14 also has a signal processing circuit **56** connected between switching circuit 16 and magnetic head 52. The signal processing circuit 56 operates under the direction of the system controller 26 for converting from parallel into serial bit form the digital information supplied from the switching circuit 16, and from serial into parallel bit form the digital information retrieved from the disk 46 by the head 52.

**Switching Circuit**

With reference to **FIG. 1** the switching circuit 16 has recording inputs **58-1** and **58-2** connected to the system input terminals 18-1 and 18-2 via the ADCs 22-1 and 22-2, respectively, and reproducing outputs **60-1**, **60-2** and **60-***n* connected to the system output terminals 20-1, 20-2 and 20-*n* via the DACs 24-1, 24-2 and 24-*n*, respectively. Also, the switching circuit 16 has recording outputs **62-1**, **62-2** and **64**, and reproducing inputs **66-1**, **66-2** and **68**. The recording outputs 62-1 and 62-2 are connected to the recording heads 36 of the tape drive 12 via the signal processing circuit 44. The other recording output 64 is connected to the read/write head 52 of the disk drive 14 via the signal processing circuit 56. The reproducing inputs 66-1 and 66-2 are connected to the reproducing heads 38 of the tape drive 12 via the signal processing circuit 44. The other reproducing input 68 is connected to the read/write head 52 of the disk drive 14 via the signal processing circuit 56. The numbers of the recording output 64 and the reproducing input 68 may of course be increased if two or more signal channels are to be stored on the disk 46 of the tape drive 14.

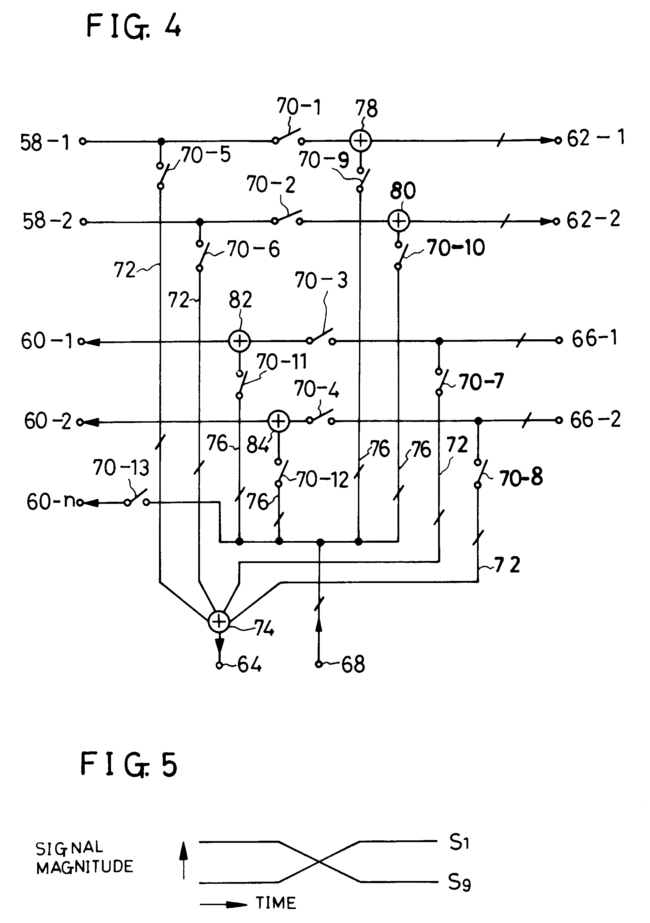

**FIG. 4** shows the switching circuit 16 in detail. First **70-1** and second **70-2** switches are connected respectively between recording inputs 58-1 and 58-2 and recording outputs 62-1 and 62-2. The input digital audio signals are therefore to be directed into the tape drive 12 when the switches 70-1 and 70-2 are closed. Third **70-3** and fourth **70-4** switches are connected respectively between reproducing inputs 66-1 and 66-2 and reproducing outputs 60-1 and 60-2. The closure of these switches 70-3 ad 70-4 results in the delivery of the signals retrieved from the tape 32 to the system output terminals 20-1 and 20-2.

Also, the recording inputs 58-1 and 58-2 and the reproducing inputs 66-1 and 66-2 are connected to fifth **70-5**, sixth **70-6**, seventh **70-7** and eighth **70-8** switches, respectively, on branch lines **72**. These branch lines connect the recording inputs 58-1 and 58-2 and the reproducing inputs 66-1 and 66-2 to the disk recording output 64 via a digital adder **74**. Accordingly, the signals supplied from the system input terminals 18-1 and 18-2 and those retrieved from the multitrack tape 32 can all be selectively directed into the disk drive 14 for recording on the disk 46.

The disk reproducing input 68 is connected to all of ninth **70-9**, tenth **70-10**, eleventh **70-11** and twelfth **70-12** switches on branch lines **76**. The branch lines 76 connect the disk reproducing input 68 to the recording outputs 62-1 and 62-2 via digital adders **78** and **80**, respectively, and to the reproducing outputs 60-1 and 60-2 via digital adders **82** and **84**, respectively. Thus the information retrieved from the disk 46 may be directed into the tape drive 12 for recording on the tape 32 or to the system output terminals 20-1 and 20-2.

Additionally, the disk reproducing input 68 is connected to the reproducing output 60-$n$ via a thirteenth switch **70-13**. The information retrieved from the disk 46 is to be put out through the system output terminal 20-$n$ when the signals from the tape 32 are being reproduced through the system output terminals 20-1 and 20-2.

I have drawn **FIG. 4** on the assumption that the disk drive 14 permits the recording of only one signal channel. Actually, however, a plurality of signal channels may be recorded on and reproduced from the disk 46. In such cases there may be provided a parallel connection of circuits each comprising the disk recording output 64, adder 74 and switches 70-5 through 70-8, adder 74, and a parallel connection of circuits each comprising the disk reproducing input 68, switches 70-9 through 70-12 and adders 78 through 84.

All the switches 70-1 through 70-13 of the switching circuit 16 may be logic switches suitable for the on-off control of digital signals under the direction of the system controller 26. Another preferred example is cross faders which are per se well known in the art.

**FIG. 5** is explanatory of how cross faders operate. Let us assume that cross faders are used in places of the switch 70-1 between recording input 58-1 and recording output 62-1 and the switch 70-9 between disk reproducing input 68 and recording output 62-1. **FIG. 5** shows changes in signal magnitude during switching from the digital signal being supplied from the recording input 58-1 to that supplied from the disk reproducing input 68. The signal magnitude through the switch 70-1 gradually decreases to a minimum whereas the signal magnitude through the switch 70-9 gradually increases to a maximum, resulting in a smooth transition from one signal to the other.

**Control System**

With reference to **FIG. 1** again, the system controller 26 can be of conventional make comprising a central processor unit, random access memories and read only memories. It is connected to the tape transport, not shown, and signal processing circuit 44 of the tape drive 12, to the head positioning mechanism 54 and signal processing circuit 56 of the disk drive 14, and to the switching circuit 16, for synchronized control of their operations.

Connected to the system controller 26, the manual controls 28 include a keyboard, a playback switch, a record switch, a stop switch and so forth. All such manual controls are to be operated by the user of this recording and reproducing system 10 for programming and for setting the system in various modes of operation. The system controller 26 has an additional terminal **86** for connection to other optional terminal equipment.

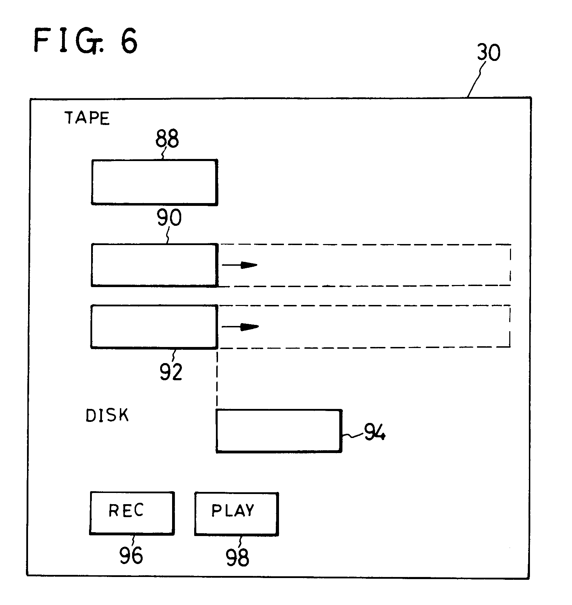

Also connected to the system controller 26, the display 30 is intended for visual observation of various operating conditions of the recording and reproducing system 10. **FIG. 6** shows by way of example various indications that may be exhibited on the screen of the display 30 during system operation. The topmost indication **88** is that representative of tape position as expressed in absolute time derived from the time code retrieved from the track 42-9 of the tape 32.

The second **90** and third **92** indications are bars representative of the running lengths of the tape tracks 42-1 and 42-2, **FIG. 2**, of the tape 32 that have been scanned by the heads 36 or 38. These bars will increase in length in the arrow marked direction with the lapse of time. On reaching the full lengths indicated by the phantom outlines, the bars will repeat themselves, starting from the left hand ends as seen in **FIG. 6**. The user is thus enabled to visually ascertain in real time the tape positions being scanned.

The fourth indication **94** is another bar which represents, by its own length, the length of time of any desired segment of information on the disk 46. The user may therefore rely on this bar for the determination of whether the information segment in question can be transferred to and rerecorded on desired part of a desired track of the tape 32, as in partial recording on the tape to be discussed subsequently. He can also cause the location of the information segment on the disk 46 to be exhibited on the display screen.

The lowermost indications **96** and **98** show whether the tape drive 12 is in the recording or the playback mode.

I suggest that any known or suitable pointing device such as a mouse be used in conjunction with the display 30. Such a pointing device will make it possible to specify any desired piece of information on the display screen and to pass such information to the system controller 26.

## OPERATION

The recording and reproducing system 10 of the foregoing construction in accordance with my invention is capable of operation in various modes that have been either impossible or very difficult with the conventional multitrack tape systems, in addition to standard modes of operation as a multitrack tape system. Examples of such novel modes of operation include joint and synchronous reproduction from both tape 32 and disk 46, partial rerecording on the tape, and copying from one track to another on the tape. I will discuss these novel modes of opera-tion under separate headings hereafter.

### Joint Tape/Disk Reproduction

Let us consider the reproduction of music together with some sound effects of far shorter duration synchronized with the music. The music may be recorded on the signal tracks 42-1 through 42-8 of the tape 32, and the sound effects on the disk 46. The full storage capacity of the multitrack tape 32 would not be utilized if one of its signal tracks is assigned to the sound effects of such short duration. The sound effects may therefore be advantageously recorded on the random access disk 46.

Then, preparatory to playback, it must be determined when the sound effects on the disk 46 is to be reproduced in the course of the reproduction of the music on the tape 32. Suppose that the sound effects is to be reproduced during music playback from the part $P_1$-$P_2$, **FIG. 2**, of the signal track 42-1 of the tape 32, corresponding to the time code $T_1$-$T_2$ on the time code track 42-9 of the tape. Then the system controller 26 may be programmed to reproduce the sound effects from the disk 46 in synchronism with the time code $T_1$-$T_2$ retrieved from the tape 32. The system controller 26 may also be informed of what part of the disk 46 the sound effects is recorded on, in terms of the track number and sector number, and of how the switches 70-1 through 70-13 of the switching circuit 16 are to be operated for such joint reproduction of music and sound effects from tape 32 arid disk 46.

For inputting the time code $T_1$-$T_2$ to the system controller 26, the user may apply the pointing device to the time code indication 88, **FIG. 6**, on the display screen. It will be apparent, then, that the time of sound effects reproduction in the course of music playback is readily alterable by the pointing device.

The system controller 26 having been programmed as above, the recording and reproducing system 10 may now been set into operation in the joint tape/disk playback mode. The tape drive 12 will start scanning the signal and time code tracks on the tape 32 by the reproducing heads 38 and 40. The disk drive will be standing by, ready for random access.

During such music playback from the tape 32, the switches 70-3 and 70-4 of the switching circuit 16 will be closed, and all the other switches 70-5 through 70-13 held open, by the system controller 26. The digital audio signals that have been retrieved from the tape 32 by the reproducing heads 38 will be reshaped in waveform by the signal processing circuit 44. Then, applied to the reproducing inputs 66-1 and 66-2 of the switching circuit 16, the retrieved audio signals will travel through the closed switches 70-3 and 70-4 and leave the switching circuit through the reproducing outputs 60-1 and 60-2. Then the audio signals will be reconverted from digital to analog form by the DACs 24-1 and 24-2. The analog audio signals will be put out through the system output terminals 20-1 and 20-2, for delivery to a mixer or to a loudspeaker system.

The system controller 26 is constantly informed of the current tape position during the progress of tape playback, as the subhead 40 reads the time code on the track 42-9 of the tape 32. On inputting the time code $T_1$ via the signal processing circuit 44 of the tape drive 12, the system controller 26 will cause the disk drive 14 to retrieve the desired sound effects information from the disk 46 and, at the same time, close the switch 70-13, **FIG. 4**, of the switching circuit 16.

Retrieved from the disk 46 by the read/write head 52, the digital sound effects signal will be translated from serial to parallel bit form by the signal processing circuit 56. Then the sound effects signal will journey through the disk reproducing input 68, switch 70-13 and reproducing output 60-$n$ of the switching circuit 16. Then, after having been translated back into analog form, the sound effects signal will be put out through the system output terminal 20-$n$, in synchronism with the part $P_1$-$P_2$, **FIG. 2**, of the audio signals being put out through the system output terminals 20-1 and 20-1 as above.

This method of sound recording and reproduction makes it possible to make full use of the storage capacity of the multitrack tape. By having the short duration sound effects recorded thereon, the disk serves as an additional track or tracks of the multitrack tape. Therefore, as indicated in **FIG. 1**, the output terminals of the recording and reproducing system according to my invention can be greater in number than the signal tracks of the tape.

### Partial Rerecording

Rerecording on specified part of a specified tape track was not impossible, but very difficult, with conventional multitrack tape recorders. This editing of recordings is, however, very easy and can be done accurately with the recording and reproducing system of my invention.

Suppose that a musical performance has just been live recorded on the tape 32. Listing to its reproduction, the performers may wish to rerecord some part of the recording. If the time code period $T_1$-$T_2$, **FIG. 2**, of the tape 32 is to be recorded, the time code $T_1$-$T_2$ may be input to the system controller 26 by the keyboard included in the manual controls 28. The manual controls 28 may also be operated to give a "rewrite preparation" command to the system controller 26.

Thereupon the system controller 26 will close the switches 70-3, 70-4 and 70-5 of the switching circuit 16 and cause the tape drive 12 to retrieve the previous recording, from a tape position slightly forwardly of the time code $T_1$ to a position slightly rearwardly of the time code $T_2$. The retrieved part of the previous recording will be reproduced through the system output terminals 20-1 and 20-2. The performers may input an alternate recording in synchronism with the reproduction of the part $T_1$-$T_2$ of the initial recording. Input through the system input terminal 18-1, for instance, the alternate recording will be stored on the disk 46 through the ADC 22-1, the recording input 58-1, switch 70-5, adder 74 and disk recording output 64 of the switching circuit 16, and the signal processing circuit 56 of the disk drive 14.

The foregoing "rewrite preparation" procedure may be repeated several times in order to provide as many alternate recordings out of which an optimum one may be later chosen in a manner to be discussed hereafter. All such alternate recordings will be written in known locations on the disk 46.

Then the alternate recordings may be reproduced one after another, and the length of time of each such alternate recording may be checked by the bar indication 94 on the display screen in order to make sure that each alternate recording is of proper length in time.

In order to determine which of the alternate recordings is to be adopted, the performers may listen to the combined reproduction of the previous recording and each of the alternate recordings. Toward this end the switches 70-3, 70-4 and 70-11 of the switching circuit 16 may be closed, and the recordings may be retrieved from both tape 32 and disk 46. The tape and disk recordings will be combined by the adder 82 and applied to the loudspeaker system via the reproducing output 60-1, DAC 24-1 and system output terminal 20-1.

Upon determination of which of the alternate recordings is to be transferred from disk 46 to tape 32, the track number and sector number of the chosen recording on the disk may be input to the system controller 26 through the manual controls 28. Then the manual controls 28 may again be manipulated to give a rewrite command to the system controller 26. The system controller will respond to this command by setting the tape drive 12 in the playback mode and the disk drive 14 in the read mode, and by closing the switch 70-9 of the switching circuit 16.

The time code on the subtrack 42-9, **FIG. 2**, is constantly read as aforesaid by the subhead 40 during the progress of tape playback. Upon inputting the time code $T_1$ from the signal processing circuit 44 of the tape drive 12, the system controller 26 will set the tape drive in the write mode and, at the same time, cause the chosen alternate recording on the disk 46 to be transferred to the tape drive via the signal processing circuit 56 of the disk drive 14 and the disk reproducing input 68, switch 70-9, adder 78 and recording output 62-1 of the switching circuit 16. The chosen alternate recording will be written on the part $P_1$-$P_2$ of the track 42-1 of the tape 32. Then the system controller 26 will terminate the write mode operation of the tape drive 1 and set it in either the playback mode or the stop mode.

Thus, thanks to the addition of the disk drive 14 to the multitrack tape drive 1, it becomes possible to replace any desired part of a multichannel recording on the tape with any of several alternate recordings on the disk. As an additional advantage, one can choose an optimum one of the alternate disk recordings by listening to the combined reproduction of the multichannel tape recording and each such alternate recording. The rewriting of the desired part of the multichannel tape recording with the chosen disk recording is possible by simple manipulation of the manual controls 28. These functional features of the combined tape/disk system according to my invention were totally absent from the conventional multichannel tape systems.

**Copying**

The recording and reproducing system 10 permits copying from any part of one track on the tape 32 to any part of another track thereon. To this end a "copy" command may be input to the system controller 26 by the manual controls 28. Thereupon the tape drive 12 will be set in the playback mode, the disk drive 14 in the write mode, and the switches 70-3 and 70-10 of the switching circuit 16 will be closed if part of the signal on the first track 42-1 is to be copied on the second track 42-2.

As the signal on the first track 42-1 of the tape 32 is audibly reproduced by the loudspeaker, not shown, the operator may manipulate the manual controls 28 at the moment copying is to be started. Thereupon the system controller 26 will close the switch 70-7 of the switching circuit 16, with the result that the reproducing head 38, reading the first track 42-1, is connected to the disk drive 14 via the reproducing input 66-1, switch 70-7, adder 74 and disk recording output 64 of the switching circuit 16. The desired part of the signal on the first track 42-1 will thus start to be written on the disk 46.

The audible reproduction of the signal on the first track 42-1 will be continued after the commencement of writing of the desired part of the first track signal on the disk, as the switch 70-3 remains closed. Listening to the audible reproduction, the operator may again manipulate the manual controls 28 at the moment the copying is to be discontinued.

Next comes the step of transferring the copy of the desired part of the first track signal from disk 46 to, say, part $P_3$-$P_4$ of the second track 42-2 on the tape 32. I have already set forth, under the heading "Partial Rerecording," how information is transferred from disk 46 to tape 32.

## Possible Modifications

Although I have shown and described my invention very specifically and as embodied in the combined tape/disk system, I recognize, of course, that my invention is not to be limited by the exact details of the foregoing disclosure but to be embodied in other forms within the broad teaching hereof. The following, then, is a brief list of possible modifications or alterations of the illustrated embodiment which I believe all fall within the scope of my invention:

1. The fixed head multitrack tape drive 12 could be replaced by conventional rotary head tape systems such as those known as video tape recorders or digital audio tape recorders. Such tape systems employ a rotary head assembly in combination with a magnetic tape on which information is recorded in the form of a series of slanting tracks. However, rotary head tape systems require time division multiplexing for recording multichannel signals. A parallel to serial converter is therefore needed for recording multichannel signals, and a serial to parallel converter to reproducing them.

2. The magnetic disk drive 14 could be replaced by an optical disk drive or by a random access memory.

3. Current tape position could be ascertained from frame synchronization or other data prerecorded on the tape, rather than from the time code.

4. The digital adder 74, shown included in the switching circuit 16, could be included in the signal processing circuit 56 of the disk drive 14.

5. Analog, rather than digital, signals could be recorded, edited, and reproduced in accordance with my invention.

## Claims

1. A recording and reproducing system having input means (18-1, 18-2) for inputting information to be recorded, characterized by comprising first storage means (12) for writing and reading information on a high capacity storage medium (32) such as a multitrack magnetic tape, second storage means (14) for writing and reading information on a random access storage medium (46) such as a magnetic disk, and switch means (16) connected between the input means (18-1, 18-2) and the first and the second storage means (12, 14) for simultaneously or selectively delivering the input information to the first and the second storage means.

2. A recording and reproducing system as claimed in claim 1, characterized in that the switch means (16) is also connected between the first and the second storage means (12, 14) for delivering the information retrieved by either of the first and the second storage means from the associated storage medium (32 or 46) to the other.

3. A recording and reproducing system characterized by comprising first storage means (12) for writing and reading information on a high capacity storage medium (32) such as a multitrack magnetic tape, second storage means (14) for writing and reading information on a random access storage medium (46) such as a magnetic disk, and switch means (16) connected between the first and the second storage means (12, 14) and output means (20-1, 20-2, 20-$n$) for simultaneously or selectively delivering to the output means the information retrieved from the high capacity storage medium (32) and the information retrieved from the random access storage medium (46).

4. A recording and reproducing system characterized by comprising first storage means (12) for writing and reading information on a high capacity storage medium (32) such as a multitrack magnetic tape, second storage means (14) for writing and reading information on a random access storage medium (46) such as a magnetic disk, switch means (16) connected between the first and the second storage means (12, 14) for the transfer of information therebetween, and control means (26) connected to the first and the second storage means (12, 14) and the switch means (16) for causing each of the first and the second storage means to retrieve information from any desired part of the associated storage medium (32 or 46), and for transferring the retrieved information to the other of the first and the second storage means thereby to be written on any desired part of the associated storage medium.

5. A recording and reproducing system having input means (18-1, 18-2) for inputting information to be recorded, and output means (20-1, 20-2, 20-n) for putting out information for reproduction, characterized by comprising first storage means (12) for writing and reading information on a high capacity storage medium (32) such as a multitrack magnetic tape, second storage means (14) for writing and reading information on a random access storage medium (46) such as a magnetic disk, and switch means (16) connected between the input means (18-1, 18-2) and the first and the second storage means (12, 14) for simultaneously or selectively delivering the input information to the first and the second storage means, the switch means (16) being also connected between the first and the second storage means (12, 14) and the output means (20-1, 20-2, 20-n) for simultaneously or selectively delivering to the output means the information retrieved from the high capacity storage medium (32) and the information retrieved from the random access storage medium (46).

6. A recording and reproducing system as claimed in claim 5, characterized in that the switch means (16) is also connected between the first and the second storage means (12, 14) for delivering the information retrieved by either of the first and the second storage means from the associated storage medium (32 or 46) to the other.

7. A multichannel recording and reproducing system having output means (20-1, 20-2, 20-n) for putting out two or more channels of information, characterized by comprising first storage means (12) for writing and reading at least one channel of information on a high capacity storage medium (32), second storage means (14) for writing and reading at least one channel of information on a random access storage medium (46), both first and second storage means (12, 14) being connected to the output means (20-1, 20-2, 20-n), and control means (26) connected to the first and the second storage means for causing the same to deliver to the output means the information retrieved from the high capacity storage medium and the information retrieved from the random access storage medium in timed relationship to each other.

8. A multichannel recording and reproducing system having input means (18-1, 18-2) for inputting two or more channels of information to be recorded, and output means (20-1, 20-2, 20-n) for putting out two or more channels of information, characterized by comprising first storage means (12) for writing and reading information on a high capacity storage medium (32) such as a multitrack magnetic tape, second storage means (14) for writing and reading information on a random access storage medium (46) such as a magnetic disk, and switch means (16) connected between the input means (18-1, 18-2) and the first and the second storage means (12, 14) for simultaneously or selectively delivering the input information to the first and the second storage means, the switch means (16) being also connected between the first and the second storage means (12, 14) and the output means (20-1, 20-2, 20-n) for simultaneously or selectively delivering to the output means the information retrieved from the high capacity storage medium (32) and the information retrieved from the random access storage medium (46).

9. A recording and reproducing system as claimed in claim 8, characterized in that the switch means (16) is also connected between the first and the second storage means (12, 14) for delivering the information retrieved by either of the first and the second storage means from the associated storage medium to the other (32 or 46).

10. A multichannel recording and reproducing system having input means (18-1, 18-2) for inputting a plurality of channels of information to be recorded, and output means (20-1, 20-2, 20-n) for putting out a plurality of channels of information, characterized by comprising first storage means (12) for writing and reading a plurality of channels of information on a high capacity storage medium (32) such as a multitrack magnetic tape, second storage means (14) for writing and reading at least one channel of information on a random access storage medium (46) such as a magnetic disk, switch means (16) through which the first and the second storage means (12, 14) are interconnected and also connected to the input and the output means, and control means (26) connected to all of the first and the second storage means (12, 14) and the switch means (16) for simultaneously or selectively delivering the input information from the input means (18-1, 18-2) to the first and the second storage means, for transferring information between the first and the second storage means, and for simultaneously or selectively delivering to the output means (20-1, 20-2, 20-$n$) the information retrieved from the high capacity storage medium (32) and the information retrieved from the random access storage medium (46).

11. A multichannel recording and reproducing system as claimed in claim 10, characterized in that the control means comprises a programmable system controller (26).

12. A multichannel recording and reproducing system as claimed in claim 11, characterized in that the control means further comprises manual control means (28) connected to the system controller (26) for programming the same and for controlling the operation of the multichannel recording and reproducing system.

13. A multichannel recording and reproducing system as claimed in claim 12, characterized in that a display (30) is connected to the system controller (26).

FIG. 1

EP 0 503 480 A2

# FIG. 2

# FIG. 3

# FIG. 4

# FIG. 5

13

# FIG. 6

30

TAPE

88

90

92

DISK

94

REC

PLAY

96

98